Europäisches Patentamt

European Patent Office

Office européen des brevets

(19)

(11) **EP 0 813 284 A2**

(12) **EUROPÄISCHE PATENTANMELDUNG**

(43) Veröffentlichungstag:
17.12.1997 Patentblatt 1997/51

(51) Int Cl.⁶: **H02J 3/18**, G05F 1/70

(21) Anmeldenummer: 97810355.4

(22) Anmeldetag: 06.06.1997

(84) Benannte Vertragsstaaten:
**AT BE CH DE DK ES FI FR GB GR IE IT LI LU MC NL PT SE**

(30) Priorität: **13.06.1996 DE 19623540**

(71) Anmelder: **Asea Brown Boveri AG**
**5401 Baden (CH)**

(72) Erfinder: **Ölscher, Jan**
**8934 Knonau (CH)**

(74) Vertreter: **Rzehak, Herbert et al**
**Asea Brown Boveri AG**
**Immaterialgüterrecht(TEI)**
**Haselstrasse 16/699 I**
**5401 Baden (CH)**

(54) **Verfahren zur Stabilisierung eines Wechselstromnetzes gegen Blindleistungsschwankungen und Blindleistungskompensationseinrichtung**

(57)  Gleichstromlichtbogenöfen (8) erzeugen im Betrieb unerwünschte Blindleistungsschwankungen, die ohne besondere Kompensationsreaktanz mittels eines Blindleistungsreglers (23) kompensiert werden. Um einen Schmelzbetrieb des Lichtbogenofens (8) an schwachen Wechselstromnetzen (1) zu ermöglichen, wird der Gleichstromlichtbogenofen (8) mit mindestens 2 Schmelzelektroden bzw. Kathoden (7, 7') betrieben. Je ein Stromregler (14, 14') steht mit Gleichrichtern (5, 5') in Steuerverbindung, wobei nur ein 2. Stromregler (14') mit dem Blindleistungsregler (23) eingangsseitig in Wirkverbindung steht. Jede Kathode (7, 7') wird bezüglich ihres Abstandes (d) von einer Schmelze (11) durch eine separate Elektrodenverstelleinrichtung (21, 21') und je einen Elektrodenregler (18, 18') gesteuert. Nur der Elektrodenregler (18') steht eingangsseitig mit dem Blindleistungsregler (23) in Wirkverbindung. Somit erfolgt eine Blindleistungsregelung nur mit einem Elektrodenstrang (S2).

FIG.1

**Beschreibung**

TECHNISCHES GEBIET

Bei der Erfindung wird ausgegangen von einem Verfahren zur Stabilisierung einer Stromversorgungseinrichtung oder eines Wechselstromnetzes gegen Blindleistungsschwankungen mindestens einer elektrischen Last, die Blindleistungsschwankungen hervorruft, nach dem Oberbegriff des Patentanspruchs 1 und von einer Blindleistungskompensationseinrichtung nach dem Oberbegriff des Patentanspruchs 3.

STAND DER TECHNIK

Mit dem Oberbegriff der Patentansprüche 1 und 3 nimmt die Erfindung auf einen Stand der Technik Bezug, wie er aus der EP 0 707 369 A1 bekannt ist. Dort sind ein Verfahren zur Stabilisierung eines Wechselstromnetzes gegen Blindleistungsschwankungen und eine Blindleistungskompensationseinrichtung angegeben, bei denen als Kompensationsreaktanz stets vorhandene Drosselspulen verwendet werden, über die ein Lichtbogenofen durch Gleichrichter gespeist wird. Die Gleichrichter werden durch einen Stromregler geregelt, der eingangs- und/oder ausgangsseitig mit dem Ausgang eines Blindleistungsreglers in Wirkverbindung steht. Beim Betrieb des Lichtbogenofens treten prozeßbedingt starke Schwankungen der Blindleistung auf, die im Frequenzbereich von 2 Hz - 20 Hz im speisenden Wechselstromnetz optisch wahrnehmbare Flackererscheinungen hervorrufen. Deren Stärke hängt von der Kurzschlußleistung des Wechselstromnetzes und von der angeschlossenen Last ab.

Aus der EP 0 639 880 A2 sind ein Verfahren zur Stabilisierung eines Wechselstromnetzes gegen Blindleistungsschwankungen und eine Blindleistungskompensationseinrichtung bekannt, bei der die Blindleistung über eine besondere, thyristorgesteuerte Drosselspule in Abhängigkeit vom Gesamtstrom der Anlage (Lichtbogenofen und Filter) geregelt wird. Dies erfordert zusätzliche, teuere Bauelemente für die Blindleistungsregelung.

In der EP 0 498 239 A1 sind ein Verfahren zur Elektrodenregelung eines Gleichstromlichtbogenofens und eine Elektrodenregeleinrichtung beschrieben, bei denen das Ausgangssignal des Stromreglers, wie bei der vorliegenden Erfindung, über ein Bandpaßfilter einem Summierer am Eingang eines Elektrodenreglers zugeführt ist. Dabei kann ein Elektrodenregler-Führungsgrößensignal durch einen Funktionsgeber in Abhängigkeit von einer Sollstromstärke für unterschiedliche Wirkfaktoren vorgegeben werden. Die Lichtbogenlänge wird, unabhängig von einer Spannungsänderung, so eingestellt, daß der jeweils benötigte Strom mit einer vorgegebenen Aussteuerung am Gleichrichter erreicht wird und somit immer ein ausreichender Regelbereich zur Verfügung steht. Eine Blindleistungsregelung ist nicht angegeben.

DARSTELLUNG DER ERFINDUNG

Die Erfindung, wie sie in den Patentansprüchen 1 und 3 definiert ist, löst die Aufgabe, ein Verfahren zur Stabilisierung eines Wechselstromnetzes gegen Blindleistungsschwankungen und eine Blindleistungskompensationseinrichtung der eingangs genannten Art derart weiterzuentwickeln, daß das Betreiben einer elekrischen Last auch an Wechselstromnetzen geringer Leistung möglich wird.

Vorteilhafte Ausgestaltungen der Erfindung sind in den abhängigen Patentansprüchen definiert.

Ein Vorteil der Erfindung besteht auch darin, daß der Betrag der Blindleistungsschwankung reduziert wird.

Werden als Last mehrere Lichtbogenöfen an der gleichen Mittelspannungsschiene betrieben, so hat sich gezeigt, daß die resultierenden Flackererscheinungen im Verhältnis zur angeschlossenen Leistung kleiner werden als bei gleicher Leistung einer Einzelanlage. Dieser Effekt wird bei einem Gleichstromlichtbogenofen mit mehreren Elektroden vorteilhaft ausgenutzt, wobei die einzelnen Versorgungsstränge immer gleichzeitig in Betrieb sind. Wenigstens ein Elektrodenstrang wird auf herkömmliche Weise, z. B. durch Halten eines Arbeitspunktes, geregelt, während mindestens ein anderer Elektrodenstrang zur schnellen Blindleistungsregelung eingesetzt wird. Ein übergeordneter Regelkreis sorgt für eine Einhaltung der Arbeitspunkte zum Schmelzen des Schmelzgutes. Die Rolle der verfügbaren Elektroden mit ihren Stromrichtersträngen kann dabei jederzeit getauscht werden.

KURZE BESCHREIBUNG DER ZEICHNUNGEN

Die Erfindung wird nachstehend anhand eines Ausführungsbeispiels erläutert. Es zeigen:

Fig. 1 einen Gleichstromlichtbogenofen mit 2 Elektroden mit je einem Stromregler, je einem Elektrodenregler und einem gemeinsamen Blindleistungsregler,

Fig. 2 ein Kennliniendiagramm für Elektrodenregler-Führungsgrößensignale in Abhängigkeit von Stromsollwerten für unterschiedliche Wirkfaktoren und

Fig. 3     ein Kennliniendiagramm für die Bestimmung der Sollblindleistung eines Gleichstromlichtbogenofens und für den Sollzündwinkel eines Gleichrichters in Abhängigkeit von einer Sollwirkleistung und Sollstromstärke des Gleichstromlichtbogenofens oder für die Bestimmung der Sollstromstärke in Abhängigkeit von Blindleistung und Zündwinkel.

## WEGE ZUR AUSFÜHRUNG DER ERFINDUNG

In den Figuren sind gleiche Teile mit gleichen Bezugszeichen gekennzeichnet. Der Einfachheit halber sind physikalische Werte und ihnen zugeordnete Signale gleich bezeichnet.

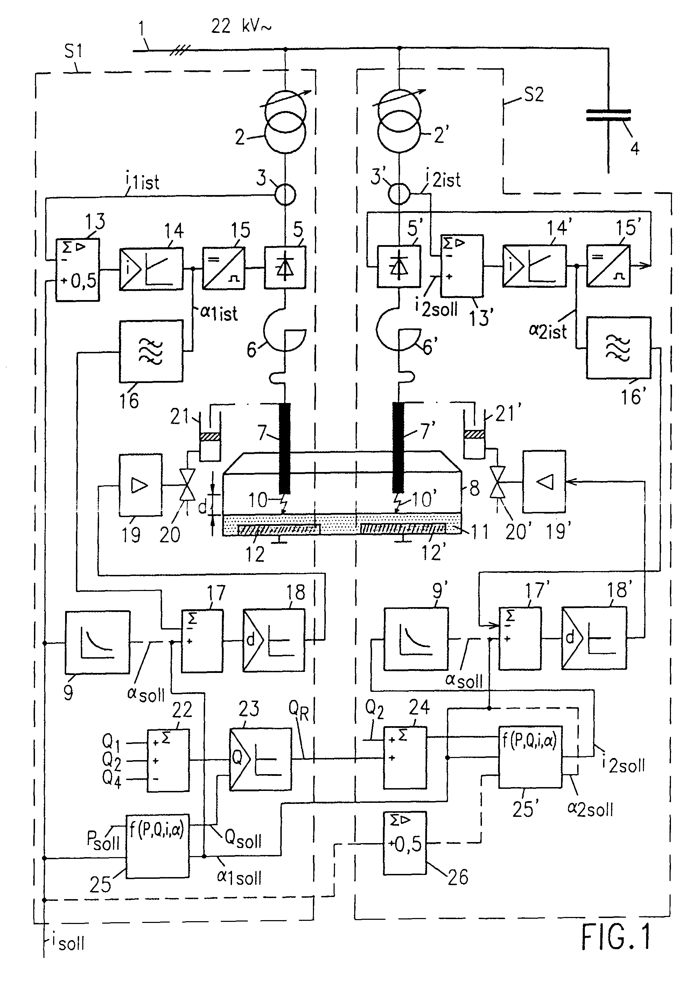

Die Figur 1 zeigt 2 im wesentlichen gleich aufgebaute Bauelementgruppen bzw. Elektrodenstränge (S1, S2), welche 2 Elektroden bzw. Kathoden (7, 7') eines Gleichstromlichtbogenofens (8) zugeordnet sind. Die physikalischen Größen der beiden Elektrodenstränge (S1, S2) unterscheiden sich durch die Indizes 1 bzw. 2, Bauelemente durch Bezugszeichen ohne Apostroph bei dem Elektrodenstrang (S1) bzw. durch Bezugszeichen mit Apostroph bei dem Elektrodenstrang (S2). Zur Vermeidung von Wiederholungen wird nachfolgend im wesentlichen nur der Elektrodenstrang (S1) beschrieben.

Ein Ofentransformator (2) mit mehreren Schaltstufen ist einerseits an ein 3phasiges Wechselstromnetz (1) mit einer Wechselspannung von 22 kV und andererseits an den Wechselspannungseingang eines Stromrichters bzw. Gleichrichters (5) angeschlossen. Die Gleichspannungsseite des Gleichrichters (5) ist über eine Drosselspule (6) mit einer 1. Schmelzelektrode bzw. Kathode (7) des Gleichstromlichtbogenofens (8) verbunden. Eine im Bodenbereich des Lichtbogenofens (8) angeordnete Gegenelektrode bzw. Anode (12) ist mit dem Pluspol des Gleichrichters (5) verbunden (nicht dargestellt). Zwischen dem unteren Ende der Kathode (7) und der Oberfläche einer Schmelze bzw. eines Schmelzbades (11) brennt ein Lichtbogen (10). (d) bezeichnet einen Abstand zwischen der Kathode (7) und der Oberfläche des Schmelzbades (11).

Mittels eines Stromwandlers (3) in der Wechselstromzuleitung zum Gleichrichter (5) wird ein Stromistwertsignal ($i_{1ist}$) detektiert und einem negierenden Eingang eines summierenden Verstärkers bzw. Summierers (13) zugeführt. Einem nichtnegierenden Faktoreingang dieses Summierers (13) mit dem Faktor 0,5 ist z. B. von einem nicht dargestellten Potentiometer ein vorgebbares Stromsollwertsignal ($i_{soll}$) zugeführt. Ausgangsseitig ist der Summierer (13) mit einem Stromregler (14) mit Proportional-Integral-Charakteristik verbunden, dem er ein Summensignal $0,5 \cdot i_{soll} - i_{1ist}$ liefert. Ausgangsseitig liefert der Stromregler (14) ein Gleichrichter-Stellgrößensignal ($\alpha_{1ist}$), entsprechend einem Zündwinkel, an einen Zündimpulswandler (15), der ausgangsseitig den Gleichrichter (5) steuert.

Das Gleichrichter-Stellgrößensignal ($\alpha_{1ist}$) ist über ein Dämpfungsglied bzw. ein Bandpaßfilter (16) zur Signalanpassung, Grenzwertüberwachung und Aussiebung unerwünschter Frequenzen mit einem negierenden Eingang eines Summierers (17) verbunden, dessen nichtnegierendem Eingang ein von einem Funktionsgenerator (25) vorgebbares Elektrodenregler-Führungsgrößensignal ($\alpha_{1soll}$), entsprechend einem Zündwinkelsollwert im Bereich von 10° - 65°, vorzugsweise im Bereich von 25° - 35°, zugeführt ist. Ausgangsseitig ist der Summierer (17) mit einem Elektrodenregler (18) mit einer Proportionalcharakteristik verbunden, der ausgangsseitig über einen Ventilverstärker (19) auf ein Ventil (20) einer Elektrodenverstelleinrichtung (21) wirkt. Die Elektrodenverstelleinrichtung (21), z. B. eine hydraulische Pumpe mit einer Verstellmechanik und einem Elektrodengeschwindigkeitsregler, ist mechanisch mit der Kathode (7) gekoppelt und ermöglicht deren Höhenverstellung; sie wirkt als ein Verzögerungsglied 1. Ordnung.

Die Elektrodenregelung arbeitet etwa 10mal langsamer als die Stromregelung. Die Höhenverstellung der Kathode (7) erfolgt so, daß der Gleichrichter (5) im Mittel mit einer Aussteuerung von z. B. 25°el. arbeitet, unabhängig von der Sekundärspannung des Ofentransformators (2) und vom eingestellten Stromsollwert ($i_{1soll}$).

Die vom Bandpaßfilter (16) auszusiebenden Frequenzen umfassen Frequenzen im Bereich von 0,5 Hz - 20 Hz.

Mit der Regelung auf konstante Aussteuerung am Gleichrichter (5) erreicht man einen konstanten mittleren Leistungsfaktor im speisenden Wechselstromnetz (1). Die Leistung eines Arbeitspunktes ist sehr einfach bestimmt mit der Anwahl einer Spannungsstufe des Ofentransformators (2) und der Vorgabe der Stärke des Gleichstromes.

Will man mit einer Spannungsstufe des Ofentransformators (2) verschiedene Arbeitspunkte bzw. eine variable Leistung fahren, so wird der Stromsollwert ($i_{1soll}$) entsprechend vorgegeben. Bei reduziertem Strom aber immer noch gleicher Aussteuerung am Gleichrichter (5) erhält man wohl kleinere Leistungen. Infolge geringerer Spannungsverluste im Wechselstromnetz (1) wird der Lichtbogen (10) jedoch länger. Der Ofenprozeß verlangt aber bei kleineren Leistungen auch kürzere Lichtbogen (10). Um dies zu erreichen, kann man bei einer Veränderung des Stromsollwertes ($i_{1soll}$) gleichzeitig auch einen entsprechenden neuen Sollwert für die Aussteuerung des Gleichrichters (5) vorgeben. Zu diesem Zweck ist ein Funktionsgeber (9) vorgesehen, der anstelle des Gleichrichter-Stellgrößensignals ($\alpha_{1ist}$) in Abhängigkeit vom Stromsollwert ($i_{soll}$) das Elektrodenregler-Führungsgrößensignal ($\alpha_{soll}$) vorgibt, wie in Fig. 1 gestrichelt angedeutet. Damit ist es auch möglich, den Leistungsbereich zu vergrößern.

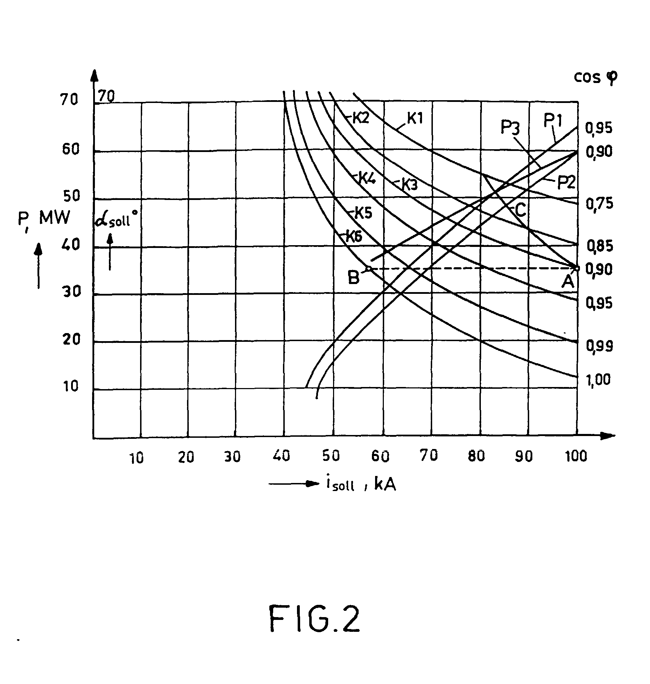

Fig. 2 zeigt mittels des Funktionsgebers (9) realisierte Funktionen, entsprechend Kurven (K1 - K6), welche das Elektrodenregler-Führungsgrößensignal ($\alpha_{soll}$) in elektrischen Graden in Abhängigkeit vom Stromsollwert ($i_{soll}$) in kA für unterschiedliche Wirkfaktoren cos $\varphi$ (0,75 - 1,00) als Parameter darstellen. Auf der Ordinate ist zusätzlich die dem Wechselstromnetz (1) entnommene Wirkleistung (P) in MW aufgetragen. Die zahlenmäßige Übereinstimmung mit dem Elektrodenregler-Führungsgrößensignal ($\alpha_{soll}$) ist rein zufällig.

Das in Verbindung mit Fig. 2 dargestellte Beispiel bezieht sich auf eine Anlage mit einer Wirkleistung (P) von 60 MW bei einem Gleichstrom von 100 kA und einer installierten Blind- bzw. Kompensationsleistung von 30 MVar. Die Anlage ist so ausgelegt, daß sich bei 100 kA und einer Aussteuerung des Gleichrichters (5) mit einem Gleichrichter-Stellgrößensignal ($\alpha_{ist}$) von 35° am einspeisenden Wechselstromnetz (1) ein Wirkfaktor cos $\varphi$ = 0,9 ergibt, entsprechend einem Arbeitspunkt (A). Eine gestrichelt dargestellte Verbindungslinie (A - B) zeigt die Begrenzung für eine minimale Gleichrichter-Aussteuerung. Ebenso können die Kurven (K1) und (K6) für cos $\varphi$ = 0,75 und 1,0 als Begrenzung betrachtet werden. Eine Kurve (C) entspricht einer Aussteuerung des Gleichrichters (5), bei der eine konstante Blindleistung vom Wechselstromnetz (1) gemäß Arbeitspunkt (A) bezogen wird; sie ist demzufolge eine Grenzlinie für maximale Netzblindleistung. Die Funktion $\alpha_{soll}$ = f($i_{soll}$) soll also in dem so begrenzten Bereich liegen und vorzugsweise der Kurve (K3) für cos $\varphi$ = 0,9 entsprechen.

Würde man die Aussteuerung von $\alpha_{soll}$ = 35° beibehalten und den Strom sukzessive von 100 kA auf 60 kA verringern, so käme man gemäß einer Wirkleistungskurve (P3) von einer Wirkleistung von 60 MW auf eine solche von 38 MW bei einem cos $\varphi \approx$ 1. Dies sind gut 60 % der maximalen Leistung.

Wird $\alpha_{soll}$ = f($i_{soll}$) vorgegeben, wobei z. B. alle

Arbeitspunkte mit cos $\varphi$ = 0,9 gemäß der Kurve (K3) gefahren werden, so benötigt man bei 50 kA einen Steuerwinkel ($\alpha_{soll}$) von 65° und erreicht damit eine Wirkleistung (P) von 15 MW gemäß einer Wirkleistungskurve (P2), somit noch 25 % der maximalen Leistung. Eine weitere Wirkleistungskurve (P1) gilt für cos $\varphi$ = 0,95 (konstant).

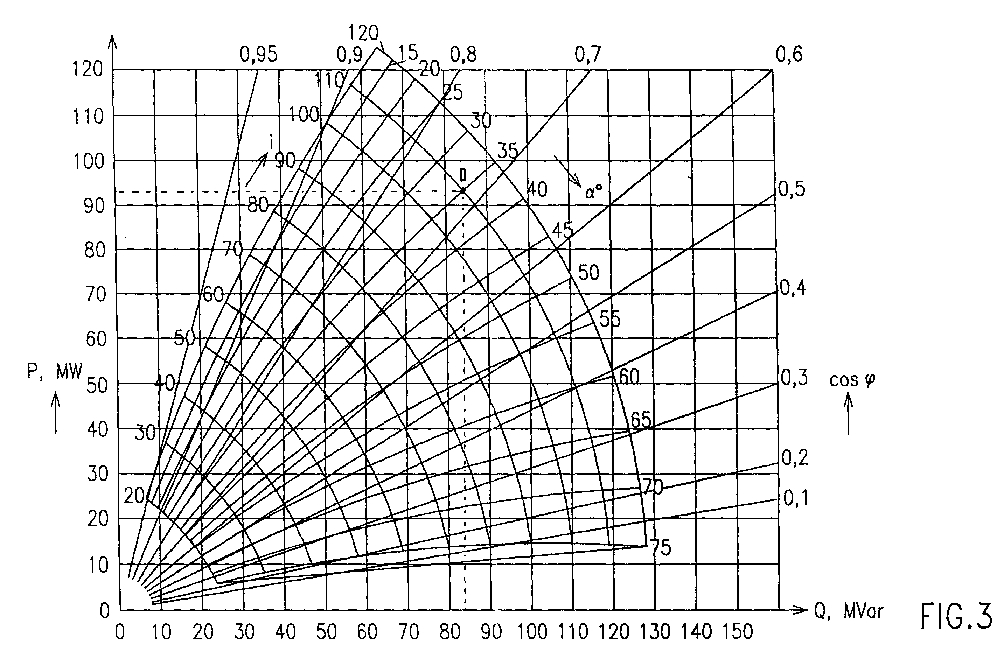

Fig. 3 zeigt mittels Funktionsgeneratoren bzw. Funktionsgebern (25) und (25') realisierte Funktionen, wobei auf der Ordinate die Wirkleistung (P) in MW und auf der Abszisse die Blindleistung (Q) in MVar aufgetragen sind. Rechts außen und oben sind an dem Diagramm die Werte für cos $\varphi$ von 0,2 - 0,95 angegeben, auf kreisförmigen Bogenabschnitten um den Nullpunkt Stromwerte (i) in kA von 20 kA - 120 kA und außen am 120 kA-Kreisbogenabschnitt Werte für den Zündwinkel ($\alpha$) in el. Grad von 15° - 75° am Ende von Kurven, die in Richtung des Koordinatenzentrums führen. Z. B. für einen Arbeitspunkt (D) beträgt die Wirkleistung (P) 93 MW, die Blindleistung (Q) 84 MVar, der Gleichstrom (i) 110 kA und der Zündwinkel ($\alpha$) 35°.

Gibt man dem Funktionsgenerator (25) eingangsseitig durch Bedienungspersonal oder durch eine nicht dargestellte übergeordnete Steuerung eine gewünschte Sollwirkleistung ($P_{soll}$) und einen gewünschten Stromsollwert ($i_{soll}$) vor, vgl. Fig. 1, so stellt der Funktionsgenerator (25) ausgangsseitig die gemäß Fig. 3 dazugehörigen Werte für die Sollblindleistung ($Q_{soll}$) und für den Zündwinkelsollwert ($\alpha_{1soll}$) zur Verfügung. Der Wert für die Sollblindleistung ($Q_{soll}$) wird einem Blindleistungsregler (23) zugeführt und der Wert für den Zündwinkelsollwert ($\alpha_{1soll}$) dem Funktionsgenerator (25') und den nichtnegierenden Eingängen der Summierer (17) und (17') als Sollwerte für die Elektrodenregler (18) und (18') der Elektrodenstränge (S1) und (S2).

Nichtnegierenden Eingängen eines Summierers (22) sind von nicht dargestellten Blindleistungsdetektoren erfaßte Blindleistungen ($Q_1$, $Q_2$) der Elektrodenstränge (S1, S2) und einem negierenden Eingang eine Kompensationblindleistung ($Q_4$) eines an das Wechselstromnetz (1) angeschlossenen Kondensators oder einer Kondensatorbank (4) zugeführt. Das Summensignal des Summierers (22) ist dem Eingang des Blindleistungsreglers (23) zugeführt, der ausgangsseitig eine Stellgröße ($Q_R$) an einen nichtnegierenden Eingang eines Summierers (24) liefert. Einem weiteren nichtnegierenden Eingang des Summierers (24) ist der Wert der Blindleistung ($Q_2$) zugeführt; ausgangsseitig ist er mit einem Eingang des Funktionsgenerators (25') verbunden, der die gleiche Funktionsschar wie der Funktionsgenerator (25) generiert und ausgangsseitig einen Stromsollwert ($i_{2soll}$) an den Eingang eines Summierers (13') sowie ggf. auf den Eingang eines Funktionsgebers (9') überträgt, der die gleiche Funktion wie der Funktionsgeber (9) generiert. Dessen Ausgangssignal ist der Zündwinkelsollwert ($\alpha_{soll}$), der anstelle des Zündwinkelsollwertes ($\alpha_{1soll}$) vom Ausgang des Funktionsgenerators (25) einem nichtnegierenden Eingang eines Summierers (17') geliefert wird.

Dem Funktionsgenerator (25') kann eingangsseitig anstelle des Zündwinkelsollwertes ($\alpha_{1soll}$) der mit 0,5 multiplizierte Wert des Stromsollwertes ($i_{soll}$) über einen summierenden Verstärker (26) mit einem Faktoreingang 0,5 geliefert werden. Der Funktionsgenerator (25') liefert dann ausgangsseitig einen Zündwinkelsollwert ($\alpha_{2soll}$), der dem Summierer (17') anstelle des Zündwinkelsollwertes ($\alpha_{1soll}$) auf einem nichtnegierenden Eingang zugeführt wird.

Wichtig ist, daß die Gesamtblindleistung der Anlage konstant gehalten wird, um Flackererscheinungen zu vermeiden. Bei konstanter Kompensationsblindleistung ($Q_4$) bedeutet dies, daß die Summe $Q_1 + Q_2$ konstant sein muß.

Beim Elektrodenstrang (S1) wird nach Arbeitspunkten einer vorgebbaren Sollgleichspannung und eines vorgebbaren Stromsollwertes ($i_{1soll}$) geregelt. Die resultierende Blindleistung ($Q_1$) wird ermittelt. Abhängig vom gewählten Arbeitspunkt und den bekannten Verhältnissen des Wechselstromnetzes (1) wird eine Sollblindleistung ($Q_{soll}$) über den Funktionsgenerator (25) vorgegeben und die gewünschte Blindleistung ($Q_2$) des Elektrodenstranges (S2) ermittelt. Aus den bekannten Anlagenparametern können die Steuergrößen: Zündwinkelsollwert $\alpha_{2soll}$ = $\alpha_{1soll}$ und Abstand (d)

zwischen Kathode (7) und Schmelzbad (11) berechnet werden, die erforderlich sind, um die gewünschte Blindleistung ($Q_{soll}$) zu erzeugen. Dabei wird der gewünschte Arbeitspunkt des Stromsollwertes ($i_{soll}$) als 2. Stützwert herangezogen. Um Prozeßeinflüsse des Elektrodenstranges (S2) zu reduzieren, wird die tatsächliche Blindleistung ($Q_2$) ermittelt und dem Elektrodenregler (18') zur Korrektur zurückgeführt. Hierbei werden die Induktivitäten des Elektrodenstranges (S2) zur Blindleistungskompensation verwendet.

Beide Kathoden (7) und (7') schmelzen im Schmelzbetrieb nichtdargestellten Schrott im Gleichstromlichtbogenofen (8) und erzeugen dabei eine bestimmte Blindleistung $Q_1 + Q_2$. An der Kathode (7) bricht Schrott ein und verkürzt dadurch plötzlich den Lichtbogen (10). Die Stromregelung hält den Gleichstrom ($i_{1ist}$) konstant und verändert das Gleichrichter-Stellgrößensignal ($\alpha_{1ist}$) entsprechend. Zu diesem Zeitpunkt kann bereits die resultierende Blindleistungsschwankung berechnet werden. Basierend auf dem aktuellen Arbeitspunkt an der Kathode (7') kann berechnet werden, welcher neue Arbeitspunkt hier eingestellt werden muß, um eine Blindleistungsänderung entgegengesetzten Vorzeichens zu erzeugen, so daß die Blindleistungssumme konstant bleibt.

Es versteht sich, daß der Gleichstromlichtbogenofen (8) auch mit mehr als 2 Kathoden (7, 7') betrieben werden kann. Wenigstens ein Elektrodenstrang (S1, S2) wird zur Blindleistungkompensation herangezogen.

BEZEICHNUNGSLISTE

| | |
|---|---|
| 1 | Wechselstromnetz |
| 2, 2' | Ofentransformatoren |
| 3, 3' | Stromwandler |
| 4 | Kondensator, Kondensatorbank |
| 5, 5' | Gleichrichter |
| 6, 6' | Drosselspulen |
| 7, 7' | Elektroden, Kathoden |
| 8 | Gleichstromlichtbogenofen, Last |
| 9, 9' | Funktionsgeber |
| 10, 10' | Lichtbögen |
| 11 | Schmelze, Schmelzbad |
| 12, 12' | Elektroden, Anoden |
| 13, 26 | summierende Verstärker |
| 14, 14' | Stromregler |
| 15, 15' | Zündimpulswandler |
| 16, 16' | Bandpaßfilter |
| 13', 17, 17', 22, 24 | Summierer |
| 18, 18' | Elektrodenregler |
| 19, 19' | Ventilverstärker |
| 20, 20' | Ventile |
| 21, 21' | Elektrodenverstelleinrichtungen |
| 23 | Blindleistungsregler |
| 25, 25' | Funktionsgeneratoren |

| | |
|---|---|
| A - D | Arbeitspunkte |
| d | Abstand der Elektrode 7 bzw. 7' von der Oberfläche der Schmelze 11 |
| i | Gleichstrom |
| $i_{1ist}$, $i_{2ist}$ | Stromistwerte von S1 bzw. S2, Stromstärke |
| $i_{soll}$ | Stromsollwert der Summe von S1 und S2, Sollstromstärke |
| $i_{1soll}$, $i_{2soll}$ | Stromsollwerte von S1 bzw. S2 |
| K1 - K6 | Kurven |
| P | Wirkleistung |
| $P_{soll}$ | Sollwirkleistung der Summe von S1 und S2 |
| P1 - P3 | Wirkleistungskurven |
| Q | Blindleistung |
| $Q_R$ | Stellgröße von 23 |
| $Q_{soll}$ | Sollblindleistung der Summe von S1 und S2, Blindleistungssollwert |
| $Q_1$, $Q_2$, | Blindleistung von S1 bzw. S2 |
| $Q_4$ | Kompensationsblindleistung von 4 |
| S1, S2 | Elektrodenstränge zu 7 bzw. 7' |
| $\alpha$ | Zündwinkel |

$\alpha_{1ist}$, $\alpha_{2ist}$     Zündwinkelistwerte, Gleichrichter-Stellgrößensignale für 5 bzw. 5'

$\alpha_{soll}$     Zündwinkelsollwerte in el. Grad

$\alpha_{1soll}$, $\alpha_{2soll}$     Zündwinkelsollwerte für 5 bzw. 5' in el. Grad, Elektrodenregler-Führungsgrößensignale

cos $\varphi$     Wirkfaktor

## Patentansprüche

1. Verfahren zur Stabilisierung eines Wechselstromnetzes (1) gegen Blindleistungsschwankungen mindestens einer elektrischen Last (8),

    a) wobei ein durch diese Last (8) fließender Strom ($i_{1ist}$, $i_{2ist}$) mittels eines Stromreglers (14, 14') in einem Stromregelkreis, der diese Last (8) als Regelstrecke enthält, durch mindestens einen Stromrichter (5, 5') auf einen vorgebbaren Stromsollwert ($i_{soll}$) geregelt wird,

    b) wobei eine durch dieser Last (8) hervorgerufene Blindleistung ($Q_1$, $Q_2$) mittels eines Blindleistungsreglers (23) in einem Blindleistungsregelkreis, der diese Last (8) als Regelstrecke enthält, auf einen vorgebbaren Blindleistungssollwert ($Q_{soll}$) geregelt wird,

    dadurch gekennzeichnet,

    c) daß der Strom ($i_{1ist}$, $i_{2ist}$) durch diese Last (8) über mindestens zwei Stromregelkreise, welche diese Last (8) als Regelstrecke enthalten, auf einen vorgebbaren Stromsollwert ($i_{soll}$) geregelt wird,

    d) daß mindestens einer dieser Stromregelkreise unabhängig von der Blindleistung ($Q_1$, $Q_2$) dieser Last (8) und

    e) daß mindestens ein anderer dieser Stromregelkreise abhängig von der Blindleistung ($Q_1$, $Q_2$) dieser Last (8) geregelt wird.

2. Verfahren nach Anspruch 1, wobei die Last (8) ein Gleichstromlichtbogenofen ist, dadurch gekennzeichnet, daß ein Abstand (d) einer beweglichen Elektrode (7') des Gleichstromlichtbogenofens (8) zur Oberfläche eines Schmelzbades (11) dieses Gleichstromlichtbogenofens (8) in Abhängigkeit vom Ausgangssignal des Blindleistungsreglers (23) geregelt wird.

3. Blindleistungskompensationseinrichtung

    a) mit mindestens einer elektrischen Last (8), die Blindleistungsschwankungen hervorruft,

    b) die über mindestens einen ersten Stromrichter (5, 5') mit einem die Last (8) speisenden Wechselstromnetz (1) in Wirkverbindung steht,

    c) mit einem Stromregler (14, 14'), der ausgangsseitig mit dem mindestens einen ersten Stromrichter (5, 5') in Steuerverbindung steht, und

    d) mit einem Blindleistungsregler (23), der ausgangsseitig mit einer den Stromrichter (5, 5') umfassenden Blindleistungskompensationseinrichtung in Steuerverbindung steht,

    dadurch gekennzeichnet,

    e) daß mindestens zwei Stromregelstrecken mit je einem Stromregler (14, 14') die Last (8) als Stellglied enthalten,

    f) daß mindestens einer dieser Stromregier (14) nicht mit dem Blindleistungsregler (23) in Wirkverbindung steht und

    g) daß mindestens ein anderer dieser Stromregler (14') eingangsseitig mit dem Blindleistungsregler (23) in Wirkverbindung steht.

4. Blindleistungskompensationseinrichtung nach Anspruch 3, dadurch gekennzeichnet,

    a) daß die Last (8) ein Gleichstromlichtbogenofen mit mindestens zwei beweglichen Elektroden (7, 7') ist,

    b) daß für jede bewegliche Elektrode (7, 7') eine separate Elektrodenverstelleinrichtung (21) vorgesehen ist,

    c) welche eingangsseitig mit je einem Elektrodenregler (18, 18') in Steuerverbindung steht und

    d) daß mindestens einer dieser Elektrodenregler (18') eingangsseitig mit dem Blindleistungsregler (23) in Wirkverbindung steht.

FIG.1

FIG.2

FIG.3

EP 0 813 284 A2